**Europäisches Patentamt**

**European Patent Office**

**Office européen des brevets**

(11) Veröffentlichungsnummer : **0 393 412 B1**

(19)

(12) **EUROPÄISCHE PATENTSCHRIFT**

(45) Veröffentlichungstag der Patentschrift :
**14.10.92 Patentblatt 92/42**

(21) Anmeldenummer : **90106225.7**

(22) Anmeldetag : **31.03.90**

(51) Int. Cl.⁵ : **F02M 59/32, F02M 57/02**

(54) **Kraftstoffeinpritzanlage, insbesondere Pumpedüse, für Brennkraftmaschinen.**

(30) Priorität : **21.04.89 DE 3913128**
**15.02.90 DE 4004610**

(43) Veröffentlichungstag der Anmeldung :
**24.10.90 Patentblatt 90/43**

(45) Bekanntmachung des Hinweises auf die
Patenterteilung :
**14.10.92 Patentblatt 92/42**

(84) Benannte Vertragsstaaten :
**AT DE FR GB IT**

(56) Entgegenhaltungen :
**EP-A- 0 133 203**

(56) Entgegenhaltungen :
**DE-A- 2 803 049**
**DE-A- 3 342 942**
**DE-A- 3 700 359**
**US-A- 3 961 612**
**US-A- 4 759 330**
**PATENT ABSTRACTS OF JAPAN vol. 9, no. 67**
**(M-366)(1790) 27 März 1985, & JP-A-59 200058**
**(HINO JIDOSHA KOGYO) 13 November1984**

(73) Patentinhaber : **ROBERT BOSCH GMBH**
**Postfach 30 02 20**
**W-7000 Stuttgart 30 (DE)**

(72) Erfinder : **Eckert, Konrad, Dr.-Dipl.-Ing.**
**Günzelburgweg 29**
**W-7000 Stuttgart 30 (DE)**

EP 0 393 412 B1

Jouve, 18, rue Saint-Denis, 75001 PARIS

## Beschreibung

Stand der Technik

Die Erfindung betrifft eine Kraftstoffeinspritzanlage, insbesondere Pumpedüse. Bei einer bekannten Dieseleinspritzanlage (DE-OS 37 00 359) wird durch den Einsatz des Zwischenkolbens in vorteilhafter Weise ein höherer Freiheitsgrad bezüglich der Regel- und Steuereingriffe bei den zur Einspritzung gehörenden Steuervorgängen erreicht; und zwar dadurch, daß in zwei voneinander getrennte Räume, nämlich in den Pumpraum und in den Druckraum, weitgehend unabhängig voneinander Flüssigkeitsmengen zugemessen werden, von denen die eine, im Pumpraum befindliche Menge den Förderbeginn und je nach vorgelagerter Einspritzmenge damit auch das Förderende bestimmt, und von denen die zweite, in den Druckraum zugemessene Kraftstoffmenge als unveränderte Einspritzmenge eingespritzt wird. Dieser Vorteil wirkt sich besonders günstig bei Direkteinspritzmotoren (im Gegensatz zu Kammermotoren) mit den dort erforderlichen hohen Einspritzdrücken aus, bei denen der gegebene hohe Förderdruck im Pumpraum und Druckraum aufgrund der Kompressibilität des Kraftstoffes einen nicht unerheblichen Einfluß auf das jeweilige Kraftstoffvolumen hat. Diese Volumenänderung würde sich besonders nachteilig bei den vorwiegend bei mechanisch gesteuerten Einspritzanlagen verwendeten Schrägkantensteuerungen auswirken, bei denen während des Druckhubes die Mengensteuerung durch Absteuern erfolgt. Bei den gattungsgemäßen Einspritzanlagen dagegen wird zwar eine unter Niederdruck über die Zumeßeinrichtung in den Druckraum zugemessene Kraftstoffmenge während des Druckhubs auch komprimiert, sie wird aber trotzdem in der vorgegebenen Menge - wie gewünscht - eingespritzt. Die Kompressibilität des Kraftstoffes kann sich dabei nicht nachteilig auswirken.

Da die Geschwindigkeit des Pumpenkolbens drehzahlabhängig ist, d.h. mit höherer Drehzahl eine höhere Kolbengeschwindigkeit besteht, und sich diese Geschwindigkeit dann, wenn sich im Pumpraum aufgrund des dort eingeschlossenen Volumens ein ausreichender Übertragungsdruck eingestellt hat, unmittelbar auf die Bewegung des Zwischenkolbens überträgt, ergibt sich bei gleicher Last, also gleicher Einspritzmenge, bei hoher Drehzahl eine sehr kurze Spritzdauer und bei niederer Drehzahl eine entsprechend längere Spritzdauer. In der zur Verfügung stehenden kurzen Spritzdauer bei hoher Drehzahl muß erforderlichenfalls auch eine Maximalmenge (Vollast) einspritzbar sein, was bei niederen Drehzahlen aufgrund des längeren zur Verfügung stehenden Zeitabschnitts unproblematisch ist. Diese Vorgabe durch die Betriebsbereiche mit Einspritzmengenunterschieden von Leerlauf bis Vollast von 1 zu 30 führt allerdings dazu, daß die im Leerlauf zur Verfügung stehende Zeit, die aufgrund der niederen Drehzahl recht lang ist, bei den im Leerlauf nur relativ geringen Einspritzmengen für einen optimalen Einspritzverlauf nicht genützt wird. Besonders im Leerlauf wirken sich aber die Motorgeräusche unangenehm laut aus, wobei aber bekanntlich eine Verlängerung der Spritzdauer, wie sie theoretisch besonders im Leerlaufbereich möglich wäre, zu einer Senkung des Motorgeräusches führen würden.

Aus der EP-A 0 133 203 ist eine weitere, als Pumpedüse ausgebildete Kraftstoffeinspritzanlage mit einem Zwischenkolben nach der Gattung des Hauptanspruchs bekannt, bei der die Entlastungsleitung des Pumpraumes in einen, eine Schließfeder des Einspritzventils aufnehmenden Federraum mündet und von dort über eine, eine Drossel enthaltende Drosselleitung in den Kraftstoffrücklauf weiterführt. Dabei dient dort das zunächst ungedrosselte Abströmen des Kraftstoffes aus dem Pumpraum in den Federraum, das zeitgleich mit dem Absteuervorgang des Druckraumes einsetzt, der Unterstützung der Einspritzventilschließfeder zum raschen Schließen des Einspritzventils.
Es ist jedoch auch mit dieser Lösung nicht möglich, den Einspritzverlauf insbesondere bei niedrigen Drehzahlen zu verlängern.

Bei einer bekannten Kraftstoffeinspritzanlage (- "Bosch-Verteilereinspritzpumpe mit Fliehkraftregler" in Bosch Technische Berichte, Band 6, 1978, Heft 2, Bild 15 auf Seite 98 und Seite 99; siehe auch US-PS 44 07 253) strömt während des Druckhubs und Leerlaufs ein Teil der vom Pumpenkolben aus dem Pumpenarbeitsraum geförderten Kraftstoffmenge über einen Drosselkanal ab, während ein anderer Teil zur Einspritzung gelangt. Die zur Aufrechterhaltung des Leerlaufs erforderliche Einspritzmenge wird trotzdem eingespritzt, weil der mechanische Regler dieser Einspritzpumpe die über den Drosselkanal abströmende Teilmenge kompensiert durch entsprechendes Verschieben der während des Druckhubs erfolgenden Absteuerung des Kraftstoffes aus dem Pumpenarbeitsraum. Durch diese Aufteilung der Fördermenge ergibt sich somit für den einzuspritzenden Teil eine längere Dauer, als wenn keine Menge über den Drosselkanal abströmen würde.

Zwar wäre theoretisch bei der gattungsgemäßen Einspritzanlage auch eine solche Regelung zur Verlängerung der Spritzdauer denkbar, nur würde diese Maßnahme einen Teil des ursprünglich gewonnen Freiheitsgrads wieder zunichte machen. Außerdem würden bei sehr hohen Einspritzdrücken aufgrund der Elastizität des Kraftstoffes zusätzliche Steuerfehler entstehen, die nur schwer beherrschbar wären. Dies gilt besonders für Pumpedüsen mit dem sehr kompakten und meist unter sehr hohen Drücken (bis zu 1800 bar) arbeitenden Pumpbereich (Pumpraum und Druckraum).

Vorteile der Erfindung

Die erfindungsgemäße Kraftstoffeinspritzanlage mit den kennzeichnenden Merkmalen des Hauptanspruchs hat demgegenüber den Vorteil, daß die einzuspritzende, unter Niederdruck während des Saughubs zugemessene Kraftstoffmenge im Druckraum unverändert bleibt, obwohl im Leerlauf eine entsprechende Spritzdauerverlängerung erzielbar ist. Die Drossel im Entlastungkanal weist einen bestimmten konstanten Querschnitt auf, so daß in Verbindung mit der Kolbengeschwindigkeit und damit der effektiven Förderdauer pro Zyklus eine wirksame Beeinflussung der Spritzdauer besteht, die mit zunehmender Drehzahl abnimmt und umgekehrt, mit abnehmender Drehzahl zunimmt, so daß bei einer niedrigen Leerlaufdrehzahl eine optimale Einspritzdauer vorhanden ist. Entsprechend der während dieser Spritzdauer geförderten Einspritzmenge strömt aus dem Pumpraum eine Flüssigkeitsmenge ab, um die die effektive Einspritzdauer verlängert wird. Die Kolbengeschwindigkeit des Zwischenkolbens ist entsprechend langsamer als die des Pumpenkolbens. Sobald eine bestimmte Drehzahl im Leerlauf erreicht ist, ist der effektive Querschnitt der Drossel so klein geworden, daß er sich auf die Spritzdauer nicht mehr auswirkt. Diese Wirkung wird mit steigender Drehzahl schnell erreicht, so daß auf ein weiteres Sperrmittel im Entlastungskanal verzichtet werden kann.

Der Drosselkanal ist kurz vor Druckhubende aber noch während des Einspritzhubes des Zwischenkolbens aufsteuerbar. Da es sich bei den Leerlaufeinspritzmengen um geringe Mengen handelt, die bei dem für Leerlauf späten Förderbeginn eingespritzt werden, und da der Förderbeginn auch vom Füllungsgrad des Pumpraumes abhängt und bei hohem Füllungsgrad meist ein früher und bei niederem Füllungsgrad meist ein später Förderbeginn gegeben ist, wirkt sich die Spritzdauerverlängerung nur dann effektiv aus, wenn tatsächlich eine verhältnismäßig geringe Fördermenge vorhanden ist, die bei dem für den Leerlauf gewünschten späten Förderbeginn eingespritzt wird, so daß der Einfluß einer solchen Spritzdauerverlängerung bei auch geringen aber oberhalb der Leerlaufmengen liegenden früher eingespritzten Einspritzmengen bei Normalbetrieb nicht mehr vorhanden ist.

Der Drosselkanal ist durch den Zwischenkolben gesteuert. Hierdurch ergibt sich ein zusätzlicher Einfluß auf die Spritzdauerverlängerung, da der Zwischenkolben erst gegen Ende seines Gesamthubes die Einspritzung durch Aufsteuern eines Absteuerkanals unterbricht, so daß das Aufsteuern des die Drossel enthaltenden Drosselkanals erst in dem Hubbereich des Zwischenkolbens erfolgt, der ohnehin bei dem der Leerlaufmenge entsprechenden Resthub wirksam ist. Bei größeren Einspritzmengen und entsprechend größerem der Einspritzung dienenden effektiven Hub des Zwischenkolbens, wird somit nur bei diesem Resthub Kraftstoff über den Drosselkanal abströmen, wobei sich dort der Effekt einer verlängerten Spritzdauer verringert bzw. vernachlässigbar klein wird.

Durch den Zwischenkolben wird gegen Druckhubende der Pumpraum zu einem Raum niederen Drucks hin entlastet. Hierdurch wird für jeden weiteren Zyklus eine einheitliche Ausgangssituation für die jeweilige Füllung des Pumpraums erzielt.

Das Förderende der Einspritzung erfolgt durch Aufsteuern eines Absteuerkanals des Druckraums gegen Druckhubende des Pumpkolbens. Hierdurch ist eine klare Zäsur bezüglich des Förderendes gegeben, wobei der wirksame Einspritzabschnitt mit Spritzanfang und Spritzende in bezug auf den Drehwinkel der Kurbelwelle oder bei einer Pumpedüse in bezug auf den Drehwinkel des Antriebsnockens vom jeweiligen Füllungsgrad des Pumpraums abhängt.

Nach einer vorteilhaften Ausgestaltung der Erfindung ist zur Absteuerung des Pumpraums in der Mantelfläche des Zwischenkolbens eine Ringnut vorhanden, die mit einer in der Zylinderbohrung des Pumpraums vorhandenen Mündung eines zum Raum niederen Drucks führenden Entlastungskanals zusammenwirkt und wobei dieser Mündung in Druckhubrichtung eine Mündung des Drosselkanals vorgelagert ist. Durch diese Ringnut ist eine saubere Aufteilung zwischen Drosselabfluß und Absteuerung bei Druckhubende gegeben.

Nach einer weiteren vorteilhaften Ausgestaltung der Erfindung ist die Mündung des Drosselkanals als in Druckhubrichtung verlaufender Drosselschlitz ausgebildet. Vorteilhafterweise wird dadurch erreicht, daß der Drosselquerschnitt im Resthubbereich mit zunehmendem Hub zunimmt, d.h., daß der Zeitquerschnitt während dieser für die Spritzdauerverlängerung effektiven Hubzeit zunimmt.

Weitere Vorteile und vorteilhafte Ausgestaltungen der Erfindung sind der nachfolgenden Beschreibung, der Zeichnung und den Ansprüchen entnehmbar.

Zeichnung

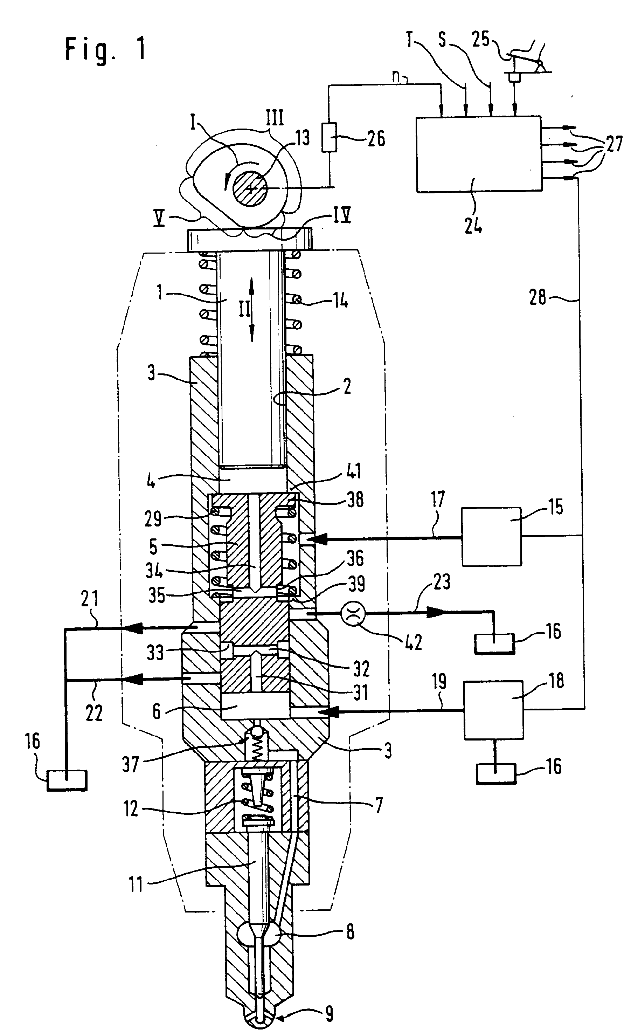

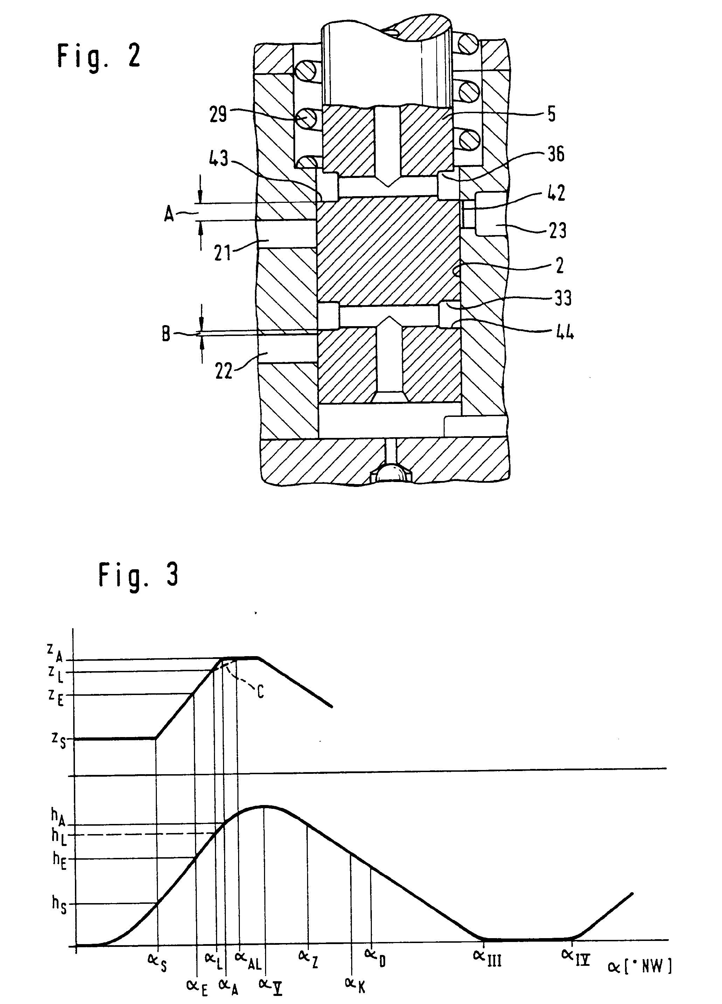

Ein Ausführungsbeispiel des Gegenstandes der Erfindung ist in der Zeichnung dargestellt und im folgenden näher beschrieben. Es zeigen Fig. 1 eine Einspritzanlage mit Pumpedüse im Längsschnitt, stark vereinfacht dargestellt, Fig. 2 einen Ausschnitt aus der Pumpedüse aus Fig. 1 in konstruktiver Darstellung und Fig. 3 ein Funktionsdiagramm, jeweils des Pumpenkolbens und Zwischenkolbens übereinander dargestellt.

Beschreibung des Ausführungsbeispiels

Bei der in Fig. 1 dargestellten Einspritzeinrichtung mit Pumpedüse arbeitet ein Pumpenkolben 1 in einer Zylinderbohrung 2 eines Pumpengehäuses 3 und begrenzt einen Pumpraum 4, der andererseits durch einen Zwischenkolben 5 begrenzt wird, der ebenfalls in der Zylinderbohrung 2 axial beweglich angeordnet ist. Unterhalb des Zwischenkolbens 5 ist ein Druckraum 6 vorgesehen, der über einen im Gehäuse 3 verlaufenden Druckkanal 7 mit einem Düsendruckraum 8 verbunden ist. Die zu einem nicht dargestellten Brennraum führenden Spritzöffnungen 9 der Pumpedüse werden über eine Ventilnadel 11 gesteuert, die durch eine Schließfeder 12 belastet ist.

Der Pumpenkolben 1 wird durch einen in Richtung des Pfeiles I rotierenden Antriebsnocken 13 entgegen der Kraft einer Rückstellfeder 14 für seine hin- und hergehende Pumpbewegung angetrieben, die durch einen Doppelpfeil II angedeutet ist.

In dieser stark vereinfachten Darstellung sind für die Funktion erforderliche Leckkanäle und -anordnungen, die zwischen dem durch die Pumpedüse verwirklichten Hochdruckteil und dem noch zu erläuternden Niederdruckteil vorhanden sind, nicht gezeigt. Dieser Pumpedüse ist ein hier nicht näher beschriebenes und zur Einspritzeinrichtung gehörendes Niederdruckkraftstoffsystem zugeordnet, mit einer Förderpumpe und Kraftstoffzumeßeinrichtungen, insbesondere in Form von Magnetventilen, da diese Gegenstände an sich bekannt sind und die Erfindung nicht unmittelbar betreffen.

Grundsätzlich trennt der Zwischenkolben 5 den Pumpraum 4 vom Druckraum 6, wobei diese beiden Arbeitsräume unabhängig voneinander mit Kraftstoff versorgt werden. So wird über ein Förderbeginnsteuergerät 15, das hier nur symbolisch durch einen Block dargestellt ist und normalerweise eine Förderpumpe und ein Magnetventil enthält, Kraftstoff aus einem Kraftstoffbehälter 16 über eine Zumeßleitung 17 in den Pumpraum 4 zugemessen.

Eine entsprechende Zumeßeinrichtung 18 ist für den Druckraum 6 vorhanden, wobei diese Zumeßeinrichtung 18 ebenfalls Kraftstoff aus dem Kraftstoffbehälter 16 ansaugt und über einen Zumeßkanal 19 in den Druckraum 6 fördert. Diese Niederdruckkraftstoffzumessung in die beiden Arbeitsräume 4 und 6 erfolgt während des Saughubes des Pumpenkolbens 1 bzw. des Zwischenkolbens 5.

Von der Zylinderbohrung 2 zweigen ein Entlastungskanal 21 und ein Absteuerkanal 22 ab, die jeweils durch den Zwischenkolben 5 nahe seiner unteren Endlage aufgesteuert werden, so daß danach der Pumpraum 4 durch den Entlastungskanal 21 und der Druckraum 6 durch den Absteuerkanal 22 zum Kraftstoffbehälter 16 hin druckentlastet sind.

Außerdem zweigt von der Zylinderbohrung 2 ein eine Drossel 42 enthaltender Drosselkanal 23 ab, der ebenfalls in den Kraftstoffbehälter 16 mündet und der durch den Zwischenkolben 5 während des Druckhubs kurz vor dem Entlastungskanal 21 bzw. dem Absteuerkanal 22 aufgesteuert wird.

Das Förderbeginnsteuergerät 15 und die Zumeßeinrichtung 18 werden durch ein elektronisches Steuergerät 24 angesteuert, um die jeweilige in den Pumpraum 4 und in den Druckraum 6 zuzumessende Kraftstoffmenge zu bestimmen und um dadurch den Förderbeginn bzw. die Motordrehzahl zu regeln. In dieses elektronische Steuergerät 24 wird über ein Gaspedal 25 die Last und über einen Drehzahlgeber 26 die Drehzahl n eingegeben, sowie über mindestens zwei weitere nicht dargestellte Geber die Temperatur T und ein weiteres Signal S, beispielsweise eines Abgaswertes oder des Außendrucks. Von den Ausgängen 27 dieses elektronischen Steuergerätes 24 führt ein Ausgang, wie dargestellt, über eine elektrische Leitung 28 zu dem Förderbeginnsteuergerät 15 bzw. der Zumeßeinrichtung 18, während die anderen drei Ausgänge 27 entsprechend einer Vierzylinderbrennkraftmaschine zu jeweils einer anderen Pumpedüse mit Förderbeginnsteuergerät und Zumeßeinrichtung führen. Natürlich wird auch das Förderbeginnsteuergerät 15 sowie die Zumeßeinrichtung 18 jeder Pumpedüse von nur einer Förderpumpe mit Kraftstoff versorgt.

Der Zwischenkolben 5 ist in Richtung Pumpraum 4 durch eine Steuerfeder 29 belastet. Im Zwischenkolben ist eine zum Druckraum 6 hin offene Axialsackbohrung 31 vorhanden, die durch eine Querbohrung 32 mit einer Ringnut 33 verbunden ist, welche auf der Mantelfläche des Zwischenkolbens 5 angeordnet ist. Außerdem ist im Zwischenkolben 5 eine zum Pumpraum 4 hin offene Axialsackbohrung 34 vorhanden, die durch eine Querbohrung 35 mit einer zweiten auf der Mantelfläche des Zwischenkolbens 5 angeordneten Ringnut 36 verbunden ist. Die Ringnut 33 steuert gegen Ende des Druckhubes des Zwischenkolbens 5 den Absteuerkanal 22 auf, wodurch die Einspritzung unmittelbar unterbrochen wird. Die Ringnut 36 hingegen steuert nach Zurücklegung eines bestimmten Druckhubes des Zwischenkolbens 5 den Drosselkanal 23 auf, so daß Kraftstoff aus dem Pumpraum 4 gedrosselt abströmen kann und steuert außerdem zur Beendigung des Druckhubes des Zwischenkolbens 5, aber auch zur Beendigung der Druckphase überhaupt, bei Druckhubende des Pumpenkolbens 1 den Entlastungskanal 21 auf.

Die Zumeßleitung 17 und der Zumeßkanal 19 sind nur in Richtung zum Pumpraum 4 bzw. Druckraum 6 durchströmbar, wie durch den Pfeil angegeben. Dies kann durch ein dort angeordnetes Rückschlagventil erzielt werden. Während im Zumeßkanal 19 stets nur in dieser Zumeßrichtung Kraftstoff strömen kann, ist für die Zumeßleitung 17 auch denkbar, daß sie in der entgegengesetzten Richtung, also zum Förderbeginnsteuergerät 15 hin durchströmbar ist, je nachdem, ob die Zumessung durch eine entsprechend begrenzt zugemessene Kraftstoffmenge in den Pumpraum 4 erfolgt, oder ob dieser Raum vollständig aufgefüllt wird und beim Druckhub ein Teil dieser während des Saughubs in den Pumpraum geförderten Menge wieder zurückströmen kann, nämlich solange, bis der Förderbeginn beabsichtigt ist.

Zwischen dem Druckraum 6 und dem Druckkanal 7 ist ein Druckventil 37 vorhanden, um ein Rückströmen vom Düsendruckraum 8 zum Druckraum 6, insbesondere während des Saughubs, zu verhindern.

Die Ablaufbahn des Antriebsnockens 13 ist in drei Abschnitte eingeteilt, nämlich für einen verhältnismäßig langen Saughubabschnitt als Saughubflanke III, für einen kurzen Rastabschnitt als Grundkreis IV des Nockens 13 und für einen steilen Druckhubabschnitt als Druckhubflanke V. In der in Fig. 2 gezeigten Arbeitsstellung wirkt gerade der Antriebsnocken 13 mit seinem Grundkreis IV auf den Pumpenkolben 1 und zwar kurz bevor die Druckhubflanke V zum Einsatz kommt, wobei der Pumpenkolben bei diesem Weiterdrehen des Antriebsnockens 13 seinen nach unten gerichteten Druckhub gerade beginnt. Der Pumpenkolben 1 nimmt demnach seine obere Totpunktlage ein, entsprechend einer Endstellung nach dem Saughub und einer Ausgangsstellung vor dem Druckhub.

Bei diesem dargestellten Ausführungsbeispiel stützt sich die Steuerfeder 29 einerseits an einem Bund 38 des Zwischenkolbens 5 ab und andererseits an einer Schulter 39 der Zylinderbohrung 2. Die in Fig. 1 dargestellte Ausgangslage des Zwischenkolbens 5 wird durch eine Schulter 41 der Zylinderbohrung 2 bestimmt.

In Fig. 2 ist der mittlere Bereich der Pumpedüse, nämlich der Steuerbereich des Zwischenkolbens 5, konstruktiv dargestellt, wobei die Drossel 42 im Drosselkanal 23 als schlitzförmige Mündung des Drosselkanals 23 zur Zylinderbohrung 2 hin ausgebildet ist. Diese schlitzförmige Drossel 42 wirkt mit der unteren Steuerkante 43 der Ringnut 36 zusammen, wobei in Fig. 2 gerade der Moment dargestellt ist, in dem diese untere Steuerkante 43 beginnt, die Drossel 42 aufzusteuern. Nach Zurücklegung des Hubes A wird dann durch diese untere Steuerkante 43 der Entlastungskanal 21 aufgesteuert. Der Absteuerkanal 22 wird hingegen bereits nach Zurücklegung des Hubes B durch die untere Steuerkante 44 der Ringnut 33 aufgesteuert, so daß sich für die Spritzdauerverlängerung nur noch dieser Hub B effektiv auswirkt, also ein verhältnismäßig geringer Hub als Aufsteuerhub der Drossel 42. Bei niederen Drehzahlen, bei denen sich der Querschnitt der Drossel 42 gemäß dem dadurch gegebenen großen Zeitquerschnitt entsprechend stark auswirkt, wird die Geschwindigkeit des Zwischenkolbens 5, dadurch daß die Antriebsflüssigkeit zum Teil über die Drossel abströmt, derart stark abgebremst, daß für die Zurücklegung des Resthubes B die gewünschte Zeit, die die Spritzdauerverlängerung ergeben soll, abläuft, wonach dann nach Aufsteuern des Absteuerkanals 22 die Einspritzung schlagartig unterbrochen wird. Trotzdem wird der Zwischenkolben 5 entsprechend verlangsamt in seine Endlage verschoben, in der dann auch der Pumpraum 4 über die Ringnut 36 zum Entlastungskanal 21 hin druckentlastet ist.

Nachfolgend wird die Funktion dieser Kraftstoffeinspritzanlage anhand des in Fig. 3 gezeigten Diagrammes erläutert. In diesem Diagramm ist über dem Drehwinkel $\alpha$ der Nockenwelle 13 (Abszisse) der Hub h des Pumpenkolbens 1 bzw. in der oberen Diagrammhälfte der Hub z des Zwischenkolbens 5 (Ordinate) aufgetragen. Die untere Kurve beschreibt den Weg des Pumpenkolbens 1, die obere Kurve den Weg des Zwischenkolbens 5.

Wenn der Pumpenkolben 1 aus der in Fig. 1 dargestellten oberen Totpunktlage, d.h. seiner Saughubendlage durch Verdrehen des Antriebsnockens 13 in Richtung des Pfeiles I angetrieben wird, so kommt die Druckhubflanke V zur Wirkung, wobei der Pumpenkolben 1 in Richtung des Pfeiles II beschleunigt nach unten verschoben wird. Die gesamte Druckhubflanke V entspricht in Fig. 3 einem Drehwinkel $\alpha$ V und zwar vom Ursprung aus gerechnet. Während eines ersten Druckhubabschnittes $h_S$ des Pumpenkolbens 1 werden im Pumpraum 4 vorhandene gasgefüllte Hohlräume ausgeglichen, so daß nach dem Drehwinkel $\alpha$ S im Pumpraum 4 nur Flüssigkeit vorhanden ist, so daß sich dort ein Hochdruck entwickeln kann. Die Größe des Hohlraumes wird während des Saughubs durch das Förderbeginnsteuergerät 15 bestimmt, das nur eine bestimmte Kraftstoffmenge in den Pumpraum 4 zumißt. Je größer diese Kraftstoffmenge ist, desto geringer ist der verbleibende und während des ersten Druckhubabschnitts auszugleichende Hohlraum, und desto kleiner ist der Ausgleichshub $h_S$. Je kleiner aber der Ausgleichshub $h_S$ ist, desto früher wird der Zwischenkolben 5 nach Aufbau eines Druckes im Pumpraum 4 für seinen eigenen Druckhub angetrieben.

Der Druckhub des Zwischenkolbens 5 erfolgt gegen die Kraft der Steuerfeder 29 und gleicht in einem ersten Abschnitt, nämlich bis zum Drehwinkel $\alpha$ E (Fig. 3), einen im Druckraum 6 befindlichen Hohlraum aus, bis auch hier aufgrund der nunmehr nur noch vorhandenen Kraftstoffes ein entsprechender Einspritzdruck einstellen kann. Dieser Einspritzdruck wird vor allem durch die Einspritzdüse bestimmt, also die Drosselwirkung der Spritzöffnungen 9, sowie den durch die Schließfeder 12 und den in Öffnungsrichtung beaufschlagten Querschnitt der Ventilnadel 11 bestimmten Öffnungsdruck. Der Pumpenkolben 1 hat dann den Hub $h_E$ zurückgelegt, der Zwischenkolben 5 den entsprechend kürzeren Hub $z_E$. Die Wirksamkeit des Hubes $h_S$ des Pumpenkolbens 1 hängt also vom Füllungsgrad des Pumpraums 4 ab und die des erst danach ermöglichten Hubes $z_E$ des Zwischenkolbens 5, bis überhaupt eine Einspritzung stattfinden kann, hängt vom Füllungsgrad des Druckraumes 6 ab. Die Summe dieser beiden Vorhübe $h_S$ und $z_E$ ergeben den Hub $h_E$ des Pumpenkolbens 1 und bestimmen den Förderbeginn vom Kraftstoff zur Brennkraftmaschine hin, also auch den Einspritzbeginn. Der tatsächliche Einspritzbeginn wird somit nicht nur durch den Füllungsgrad des Pumpraumes 4 bestimmt, sondern stets durch die Addierung des Füllungsgrads beider Arbeitsräume 4 und 6. Über das elektronische Steuergerät 24 wird dieser Zusammenhang über ein Einspritzprogramm berücksichtigt, d.h., daß bei zunehmender Einspritzmenge, also für höheren Füllungsgrad im Druckraum 6, für den gleichen Förderbeginn eine entsprechende Abnahme des Füllungsgrads im Pumpraum 4 bewirkt wird. Die Extremfälle sind ein sehr früher Förderbeginn bei höchster Einspritzmenge, wie es bei der Vollast der Fall ist, und ein später Förderbeginn bei sehr geringer Drehzahl, wie es beim Leerlauf der Fall ist. Bei Vollast ist somit der Hub $h_S$ sehr kurz und auch der Hub $z_E$ des Zwischenkolbens 5, so daß beide Arbeitsräume 4 und 6 extrem aufgefüllt sind, wohingegen beim Leerlauf der Pumpenkolben 1 und der Zwischenkolben 5 einen extrem langen Hub zurückgelegt haben, bevor ein für die Einspritzung erforderlicher hoher Druck im Druckraum 6 sich eingestellt hat.

Im Fig. 2 ist der Zwischenkolben 5 in der Hublage dargestellt, die in Fig. 3 mit $z_L$ bezeichnet ist und bei der durch die untere Steuerkante 43 der Ringnut 36 gerade die Drossel 42 des Drosselkanals 23 aufgesteuert wird. Da die Ringnut 36 über die Querbohrung 35 und die Axialsackbohrung 34 mit dem Pumpraum 4 verbunden ist, entsteht ab diesem Moment ein Drosselabfluß aus dem Pumpraum 4 mit einem Zeitquerschnitt, bei dem der Faktor Zeit von der Drehzahl des Motors und der Nockenwelle 13 abhängt. Der Faktor Querschnitt hängt nur von dem weiteren Hub des Zwischenkolbens 5 und dem dabei zusätzlich freigelegten Schlitz der Drossel 42 ab. Dieser effektive Drosselschlitz vergrößert sich proportional mit dem Hub des Zwischenkolbens 5 und kann so als konstanter Faktor programmiert werden. Der Hub des Zwischenkolbens 5 wird bei $z_A$ beendet, wenn durch die untere Steuerkante 43 der Ringnut 36 der Entlastungskanal 21 aufgesteuert wird und der bis $\alpha$ V weiter angetriebene Pumpenkolben 1 den Kraftstoff aus dem Pumpraum 4 direkt zum Entlastungskanal 21 herausfördert. In jedem Fall wird aber der dem Zwischenkolben 5 im Druckraum 6 zur Einspritzung vorgelagerte, während des Saughubs zugemessene Kraftstoff über das Druckventil 37, den Druckkanal 7, den Düsendruckraum 8 und die Spritzöffnungen 9 in die Brennkraftmaschine eingespritzt, bis die untere Steuerkante 44 der Ringnut 33 in Fig. 2 nach Zurücklegung des Hubes B den Absteuerkanal 22 aufsteuert, wodurch die Einspritzung beendet wird. Dies ist nach Zurücklegung des Hubes $z_A$ des Zwischenkolbens 5 erreicht.

Im oberen Teil von Fig. 3 sind zwei unterschiedliche Kurvenverläufe für die gleiche Einspritzmenge gezeigt. Die durchgezogene Kurve entspricht höheren Drehzahlen bei einer dem Leerlauf entsprechenden kleinen Einspritzmenge, wie sie z.B. im Schubbetrieb auftreten kann (Bergabfahrt bei zurückgenommenem Gas), so daß der Zeitquerschnitt des Drosselkanals 23 bzw. der Drossel 42 äußerst kurz ist und sich somit auf eine Spritzdauerverlängerung kaum auswirkt. Die obere Kurve ist deshalb geradlinig durchgezogen, obwohl tatsächlich bei exakter Darstellung ein (je nach Drehzahl unterschiedlicher) geringer Knick ab $\alpha$ L vorhanden ist. Die gestrichelt dargestellte Kennlinie c hingegen bezeichnet den Fall, in dem die Drehzahl so niedrig ist, wie beispielsweise im Leerlauf, so daß der Zeitquerschnitt der schlitzförmigen Drossel 42 verhältnismäßig groß ist und entsprechend mehr Kraftstoff aus dem Pumpraum 4 über diese Drossel abströmt, bevor durch die Ringnut 33 der Absteuerkanal 22 aufgesteuert wird. Während die Spritzdauer im ersten Fall beim Drehwinkel $\alpha$ A geendet hat, verlängert sie sich im zweiten Fall bis zum Drehwinkel $\alpha$ AL. Diese Art von Steuerung hat insofern einen gewissen Selbstregeleffekt, als diese "automatische" Spritzdauerverlängerung nur dann effektiv für die Kraftstoffverbrennung wird, wenn die Einspritzmengen verhältnismäßig klein sowie die Drehzahlen verhältnismäßig niedrig sind (Leerlauf).

Beim Weiterdrehen des Antriebsnockens 13 in Pfeilrichtung I kommt die verhältnismäßig lange Saughubflanke III zur Wirkung, während der durch die Rückstellfeder 14 des Pumpenkolbens 1 und die Steuerfeder 29 des Zwischenkolbens 5 angetrieben der Pumpenkolben 1 und der Zwischenkolben 5 wieder in die in Fig. 1 dargestellte Ausgangslage gelangen. Diese ist dann beim Drehwinkel $\alpha$ III erreicht, bis nach Zurücklegung des Grundkreises IV, also beim Drehwinkel $\alpha$ IV, ein neuerlicher Druckhub beginnt. Während des Saughubes wird, nachdem die Ringnut 33 von dem Absteuerkanal 22 getrennt ist, ab dem Drehwinkel $\alpha$ Z über die Zumeßeinrichtung 18 und den Zumeßkanal 19 eine beim nächsten Einspritzzyklus einzuspritzende Kraftstoffmenge in den Druckraum 6 zugemessen. Die maximalmögliche Menge wird durch den möglichen Hub des Zwischenkolbens 5 bestimmt, der durch die Schulter 41 festgelegt ist. Der Zwischenkolben 5 stößt beim Drehwinkel $\alpha$ K auf diese Schulter 41, wobei im Druckraum 6, nachdem die Zumessung beendet ist, ein Hohlraum dadurch entsteht, daß die Steuerfeder 29 den Zwischenkolben 5 vollends an die Schulter 41 schiebt. Spätestens danach erfolgt die Zumessung von Kraftstoff in den Pumpraum 4 durch das Förderbeginnsteuergerät 15 zur Festlegung des Förderbeginns und in Verbindung mit der Einspritzmenge des Förderendes.

In jenem Fall erfolgt jedoch diese Zumessung in den Pumpraum 4 erst ab dem Zeitpunkt, ab die Ringnut 36 wieder vom Drosselkanal 23, nämlich ab dem Drehwinkel $\alpha$ D, getrennt ist.

**Patentansprüche**

1. Kraftstoffeinspritzanlage für Brennkraftmaschinen, mit einem Pumpraum (4) eines stets den gleichen Hub ausführenden Pumpenkolbens (1), mit einem eine Einspritzdüse über eine Druckleitung (7) mit der einzuspritzenden Kraftstoffmenge versorgenden Druckraum (6), mit einem den Pumpraum (4) und Druckraum (6) hydraulisch trennenden Zwischenkolben (5), durch den ein eine Drossel (42) enthaltener den Pumpraum (4) entlastender Drosselkanal (23) im Laufe des Druckhubs des Pumpenkolbens (1) aufgesteuert wird und ein zu einem Entlastungsraum (16) führender Absteuerkanal des Druckraumes (6) aufsteuerbar ist, mit einer Zumeßeinrichtung (18) für die einzuspritzende Kraftstoffmenge und Zuführung derselben während des Saughubes des Pumpenkolbens (1) in den Druckraum (6) und mit Bestimmung des Förderbeginns durch das im Pumpraum (4) vorhandene, über eine Zumeßleitung (19) gesteuert änderbare Flüssigkeitsvolumen, dadurch gekennzeichnet, daß der Drosselkanal (23) geöffnet ist bevor der Absteuerkanal (22) durch den Zwischenkolben (5) geöffnet wird und bevor ein Entlastungskanal (21) durch den Zwischenkolben geöffnet wird, der den Pumpraum (4) mit dem Entlastungsraum (16) verbindet und daß der Drosselkanal den Pumpraum (4) unmittelbar mit dem Entlastungsraum (16) verbindet.

2. Kraftstoffeinspritzanlage nach Anspruch 1 dadurch gekennzeichnet, daß in der Mantelfläche des Zwischenkolbens (5) eine mit dem Pumpraum (4) verbundenen Ringnut (36) vorhanden ist, die mit einer in der Zylinderbohrung (2) des Pumpenkolbens (1) vorhandenen Mündung eines zum Raum niederer Drucks führenden Entlastungskanals (21) zusammenwirkt, und daß dieser Mündung in Druckhubrichtung eine Mündung des Drosselkanals (23) vorgelagert ist.

3. Kraftstoffeinspritzanlage nach Anspruch 2, dadurch gekennzeichnet, daß die Drossel (42) des Drosselkanals (23) von dessen Mündung in die Zylinderbohrung (2) des Pumpraums (4) gebildet ist und die Form eines in Druckhubrichtung verlaufenden Drosselschlitzes hat.

**Claims**

1. Fuel injection equipment for internal combustion engines, having a pump space (4) of a pump piston (1) always executing the same stroke, having a pressure space (6) supplying an injection nozzle, via a pressure conduit (7), with the quantity of fuel to be injected, having an intermediate piston (5) hydraulically separating the pump space (4) and the pressure space (6), by means of which intermediate piston (5) a throttle duct (23) containing a throttle (42) and relieving the pump space (4) is activated in the course of the compression stroke of the pump piston (1) and a de-activation duct, of the pressure space (6), leading to a relief space (16) can be activated, having a metering device (18) for the fuel quantity to be injected and supply of the same, during the suction stroke of the pump piston (1), into the pressure space (6) and having the beginning of delivery determined by the variable fluid volume present in the pump space (4) and controlled by a metering conduit (19), characterised in that the throttle duct (23) is open before the de-activation duct (22) is opened by the intermediate piston (5) and before a relief duct (21), which connects the pump space (4) to the relief space (16), is opened by the intermediate piston and in that the throttle duct connects the pump space (4) directly to the relief space (16).

2. Fuel injection equipment according to Claim 1, characterised in that an annular groove (36) connected to the pump space (4) is present in the outer surface of the intermediate piston (5), which annular groove (36) interacts with an outlet of a relief duct (21) leading to the lower pressure space and located in the cylinder bore (2) of the pump piston (1) and in that this outlet is preceded by an outlet of the throttle duct (23) in the direction of the compression stroke.

3. Fuel injection equipment according to Claim 2, characterised in that the throttle (42) of the throttle duct (23) is formed by this outlet into the cylinder bore (2) of the pump space (4) and has the shape of a throttle slot extending in the direction of compression stroke.

**Revendications**

1) Dispositif d'injection de carburant pour moteurs à combustion interne, avec une chambre de pompe (4) d'un piston de pompe (1) parcourant constamment la même course, avec une chambre de refoulement (6) alimentant avec la quantité de carburant à injecter un injecteur par l'intermédiaire d'une canalisation de refoulement (7), avec un piston intermédiaire (5) séparant hydrauliquement la chambre de pompe (4) et la chambre de refoulement (6), piston grâce auquel un canal d'étranglement (23) comportant un étranglement (42) et déchargeant la chambre (4) de la pompe est commandé à l'ouverture au cours de la course de refoulement du piston (1) de la pompe, tandis qu'un canal d'évacuation de la chambre de refoulement (6) aboutissant à une chambre de décharge (16) est susceptible d'être commandé à l'ouverture, avec un dispositif de dosage (18) pour la quantité de carburant à injecter et alimentation de cette quantité dans la chambre de refoulement (6) pendant la course d'aspiration du piston de pompe (1), et avec détermination du début du refoulement par le volume modifiable du liquide présent dans la chambre de pompe (4) et contrôlé par l'intermédiaire d'une canalisation de dosage (19), dispositif caractérise en ce que le canal d'étranglement (23) est ouvert avant que le canal d'évacuation (22) soit ouvert par le piston intermédiaire (5) et avant que soit ouvert par le piston intermédiaire un canal de décharge (21) qui relie la chambre de pompe (4) avec la chambre de décharge (16) et que le canal d'étranglement relie directement la chambre de pompe (4) à la chambre de décharge (16).

2) Dispositif d'injection de carburant selon la revendication 1, caractérisé en ce qu'il est prévu dans la surface enveloppe du piston intermédiaire (5) une gorge annulaire (36) reliée à la chambre de pompe (4) et qui coopère avec une embouchure prévue dans l'alésage cylindrique (2) du piston de pompe (1) d'un canal de décharge (21) aboutissant à une chambre de basse pression, et en ce que cette embouchure est précédée dans le sens de la course de refoulement par une embouchure du canal d'étranglement (23).

3) Dispositif d'injection de carburant selon la revendication 2, caractérisé en ce que l'étranglement (42) du canal d'étranglement (23) est constitué par son embouchure dans l'alésage cylindrique (2) de la chambre de pompe (4) et à la forme d'une fente d'étranglement s'étendant dans la direction de la course de refoulement.

# Fig. 1

Fig. 2

29

43

A

21

B

22

5

36

42

23

2

33

44

Fig. 3

$z_A$
$z_L$
$z_E$

$z_S$

$h_A$
$h_L$
$h_E$

$h_S$

C

$\alpha_S$   $\alpha_L$   $\alpha_{AL}$   $\alpha_Z$   $\alpha_D$   $\alpha_{III}$   $\alpha_{IV}$   $\alpha$ [ ° NW ]

$\alpha_E$   $\alpha_A$   $\alpha_V$   $\alpha_K$